# EUROPEAN PATENT APPLICATION

(11) **EP 3 575 089 A1**
(43) Date of publication of application: **04.12.2019**
(21) Application number: 18175237.9
(22) Date of filing: 30.05.2018
(51) Int. Cl.: B33Y 30/00, B29C 64/25

(54) **SUPPORT STRUCTURE FOR SUPPORTING A FUNCTIONAL COMPONENT OF AN APPARATUS FOR ADDITIVELY MANUFACTURING A THREE-DIMENSIONAL OBJECT**

(71) Applicant: CL Schutzrechtsverwaltungs GmbH, 96215 Lichtenfels (DE)
(72) Inventor: Döhler, Tim, 96269 Großheirath (DE); Petersen, Martin, 85586 Poing (DE); Kourkoutsaki, Theodosia, 96215 Lichtenfels (DE)
(74) Representative: Hafner & Kohl Patent- und Rechtsanwälte Partnerschaft mbB

(57) **Abstract**

Support structure (11) for supporting a functional component of an apparatus (1) for additively manufacturing at least one three-dimensional object (2) by means of successive layerwise selective consolidation of layers of a build material (3), wherein
the support structure (11) comprises at least one support structure element which is built of a material or material structure having a coefficient of thermal expansion of 8 x 10⁻⁶ K⁻¹ or below 8 x 10⁻⁶ K⁻¹.

## Description

The invention relates to a support structure for supporting a functional component of an apparatus for additively manufacturing at least one three-dimensional object by means of successive layerwise selective consolidation of layers of a build material.

Respective support structures for supporting a functional component of an apparatus for additively manufacturing a three-dimensional object by means of successive layerwise selective irradiation and consolidation of layers of build material are generally known from the technological field of additive manufacturing.

Respective support structures are typically subject to thermally induced expansion, e.g. caused by thermal energy generated during operation of a respective additive manufacturing apparatus. Respective thermally induced expansion may lead to a change or drift of the position and/or orientation of a respective support structure with respect to a defined initial position and/or orientation.

Respective changes or drifts of the position and/or orientation of a respective support structure with respect to a defined initial position and/or orientation should generally avoided. This particularly applies to changes or drifts of the position and/or orientation of a respective support structure which supports a functional component, for example an optical component, which requires a highly exact position and orientation e.g. relative to the build plane of the apparatus.

Hence, there exists a need for further developed support structures which avoid or reduce respective changes or drifts of the position and/or orientation of a respective support structure with respect to a defined initial position and/or orientation.

It is the object of the invention to provide a further developed support structure for supporting a functional component of an apparatus for additively manufacturing at least one three-dimensional object which particularly, avoids or reduces respective changes or drifts of the position and/or orientation of a respective support structure with respect to a defined initial position and/or orientation.

This object is achieved by a support structure according to Claim 1. The claims depending on Claim 1 relate to possible embodiments of the support structure according to Claim 1.

The support structure described herein is a support structure for supporting at least one functional component of an apparatus ("additive manufacturing apparatus") for additively manufacturing at least one three-dimensional object. The support structure described herein is thus, configured to support at least one functional component of an additive manufacturing apparatus. As will be apparent from below, a respective functional component may particularly, be an optical component assignable or assigned to an irradiation device of a respective additive manufacturing apparatus.

The support structure may comprise at least one support interface for supporting at least one functional component of a respective additive manufacturing apparatus. A respective support interface may be built as or comprise a, particularly compartment-like, receiving section for receiving a respective functional component of a respective additive manufacturing apparatus. A respective, particularly compartment-like, receiving section for receiving a respective functional component of a respective additive manufacturing apparatus may be delimited by walls of the support structure.

A respective support structure may also be built as or comprise a bore for receiving an attachment element, e.g. a bolt, screw, etc., for attaching a respective functional component to the support structure. Hence, the term "support" may also comprise a, particularly detachable, attachment of a respective functional component to the support structure.

The support structure may comprise at least one, particularly compartment-like, receiving section for receiving the at least one functional component of the additive manufacturing apparatus. A respective, particularly compartment-like, receiving section may be designed with respective to a respective functional component which is to be received in it. Hence, the shape and size of a respective receiving section may be at least partly, particularly entirely, adapted to the shape and size of a respective functional component which is to be received in it. A respective, particularly compartment-like, receiving section may be integrally formed with the support structure. A respective, particularly compartment-like, receiving section may also be generated by machining, e.g. boring drilling, milling, the support structure.

The support structure comprises one or more, particularly interconnected, structure element(s). The support structure may thus, be built of one or more, particularly interconnected, support structure element(s). The arrangement, shape, and size of the at least one support structure element typically depends on the concrete constructive design of the support structure. Generally, all kinds of arrangements, shapes, and sizes of support structure elements are conceivable in view of a concrete constructive design of the support structure. Merely as an example, a support structure element may have a, particularly bar- or rod-like, longitudinal shape or a plate- or wall-like shape. Yet, more complex three-dimensional shapes of a respective support structure element, e.g. at least partly bent or curved shapes, are conceivable as well.

The support structure may have a frame-like design. The support structure may thus, also be deemed or denoted as a support frame. In this regard, a respective support structure element may form a frame element of a respective support frame.

The support structure may have a housing-like design. The support structure may thus, also be deemed or denoted as a support housing. In this regard, a respective support structure element may form a housing element of a respective support frame.

The support structure, respectively may comprise at least one attachment interface for directly or indirectly attaching the support structure at an additive manufacturing apparatus, particularly at a wall of a process chamber of an additive manufacturing apparatus. A respective attachment interface may be built as or comprise a bore for receiving an attachment element, e.g. a bolt, screw, etc., for attaching the support structure to the additive manufacturing apparatus. The support structure may be particularly, attached to a top wall of a process chamber of an additive manufacturing apparatus. The support structure may be thus, attached to a freely exposed portion of a top wall of a process chamber of an additive manufacturing apparatus.

The support structure may be provided with at least one functional opening for a supply line, e.g. an energy line, optical line, etc. which is to be connected with a functional component supported by the support structure. Alternatively or additionally, the support structure may be provided with at least one functional opening for an energy beam used for selectively consolidating a build material layer applied in the build plane of a respective additive manufacturing apparatus. Respective openings may be provided with walls of the support structure.

In either case, the at least one support structure element of the support structure is built of a material or a material structure having a coefficient of thermal expansion (CTE) of 8 x 10⁻⁶ K⁻¹ or below 8 x 10⁻⁶ K⁻¹. In the case that the support structure comprises a plurality of support structure elements, at least one support structure element, preferably all support structure elements, is/are built of a material or a material structure having a coefficient of thermal expansion of 8 x 10⁻⁶ K⁻¹ or below 8 x 10⁻⁶ K⁻¹. Hence, the (entire) support structure may be built of a material having a coefficient of thermal expansion of 8 x 10⁻⁶ K⁻¹ or below 8 x 10⁻⁶ K⁻¹. The support structure elements and the support structure, respectively are thus, made of a material or material structure having outstanding thermal properties, i.e. particularly a very low coefficient of thermal expansion and a very low coefficient of thermal extension, respectively.

This is particularly, evident from a comparison of a support structure element as described herein with a support structure element known from a conventional support structure according to prior art, which is typically made of a material having a relatively comparatively high coefficient of thermal expansion above 12 x 10⁻⁶ K⁻¹. Conventional support structure elements are typically made of aluminum having a coefficient of thermal expansion of 23 x 10⁻⁶ K⁻¹ or steel having a coefficient of thermal expansion of about 13 x 10⁻⁶ K⁻¹. Hence, particularly compared with support structure elements known from conventional support structures, the support structure elements as described herein have an outstanding thermal stability due to a very low coefficient of thermal expansion of 8 x 10⁻⁶ K⁻¹ or even below 8 x 10⁻⁶ K⁻¹.

The support structure described herein is thus, at least partly, particularly entirely, built of materials having a very low coefficient of thermal expansion which are not used in conventional support structures.

The support structure elements thus, allow for avoiding or at least (significantly) reducing changes or drifts of the position and/or orientation of the support structure, when being mounted with an additive manufacturing apparatus, with respect to a defined initial position and/or orientation. Since the thermal expansion and resulting drifts or changes of the position and/or orientation of the support structure and the functional component(s) supported therewith may negatively affect the additive build process, building the support structure element(s) and the support structure, respectively of a material or material structure having a very low coefficient of thermal expansion directly improves the quality of the additive build process.

According to a first group of exemplary embodiments, the support structure or a respective support structure element may be made of a metal having a coefficient of thermal expansion of 8 x 10⁻⁶ K⁻¹ or even below 8 x 10⁻⁶ K⁻¹. According to a second group of exemplary embodiments, the support structure or a respective support structure element may be made of a plastic- or polymer-based material having a coefficient of thermal expansion of 8 x 10⁻⁶ K⁻¹ or even below 8 x 10⁻⁶ K⁻¹. According to a third group of exemplary embodiments, the support structure or a respective support structure element may be made of or comprise a sandwich structure having a coefficient of thermal expansion of 8 x 10⁻⁶ K⁻¹ or even below 8 x 10⁻⁶ K⁻¹. Respective groups of exemplary embodiments may be combined in arbitrary manner; thus, a support structure may be built of or comprise a metal having a coefficient of thermal expansion of 8 x 10⁻⁶ K⁻¹ or even below 8 x 10⁻⁶ K⁻¹ and/or a plastic- or polymer-based material having a coefficient of thermal expansion of 8 x 10⁻⁶ K⁻¹ or even below 8 x 10⁻⁶ K⁻¹ and/or a sandwich structure having a coefficient of thermal expansion of 8 x 10⁻⁶ K⁻¹ or even below 8 x 10⁻⁶ K⁻¹.

With respect to the first group of exemplary embodiments, the at least one support structure element may be made of a metal being nickel iron alloy or comprising a nickel iron alloy. Nickel iron alloys have outstanding thermal properties, particularly with respect to the coefficient of thermal expansion which is typically below 5 x 10⁻⁶ K⁻¹, particularly below 3 x 10⁻⁶ K⁻¹, preferably below 2 x 10⁻⁶ K⁻¹. This particularly applies to a nickel iron alloy consisting of around 36% nickel and 64% iron. This nickel iron alloy is known as FeNi36 (64FeNi in the US) or Invar, respectively and has a coefficient of thermal expansion (between 20°C and 100°C) of about 1,2 x 10⁻⁶ K⁻¹. Yet, nickel iron alloys of other compositions, such as FeNi42, or FeNi33Co4.5, are also conceivable. Also, other metal alloys having a similar coefficient of thermal expansion are conceivable.

With respect to the second group of exemplary embodiments, the at least one support structure element may be made of a plastic- or polymer-based compound material comprising a resin-like plastic- or polymer matrix, particularly a thermosetting- or thermoplastic-matrix, having a plurality of fibers, particularly reinforcing fibers, distributed therein in a specific fiber arrangement. Respective plastic- or polymer-based compound material also have outstanding thermal properties, particularly with respect to the coefficient of thermal expansion which is typically below 5 x 10⁻⁶ K⁻¹, particularly below 3 x 10⁻⁶ K⁻¹, preferably below 2 x 10⁻⁶ K⁻¹. A respective plastic- or polymer matrix may be made of a polyester- or polyurethane-material, for instance. Respective fibers, may be natural or synthetic fibers, for instance. Respective fibers may particularly be, aramid fibers, carbon fibers, or glass fibers. Carbon fibers may be preferred due to their outstanding structural properties, i.e. particularly thermal and mechanical properties.

A further positive aspect of a respective plastic- or polymer-based compound material is their good thermally insulating properties so that respective functional components supported by a support structure made of a respective plastic- or polymer-based compound material may also be thermally insulated.

In either case, respective fibers may be longitudinal fibers allowing for combining them in a fabric-like or fabric arrangement, particularly a meshwork-like or meshwork arrangement.

The fibers typically, are arranged in a specific manner so as to form a fiber arrangement having specific structural properties which are essentially defined by the arrangement and type of the respective fibers forming the fiber arrangement.

With respect to a respective fiber arrangement, at least a part of the fibers may be arranged in a fabric-like or fabric arrangement, particularly a meshwork-like or meshwork arrangement. The fabric-like or fabric arrangement, particularly a meshwork-like or meshwork arrangement, of the fibers may be chosen or designed under consideration of specific structural loads, e.g. mechanical and/or thermal loads, of the support structure in a specific operational environment. Hence, the fabric-like or fabric arrangement, particularly the meshwork-like or meshwork arrangement, may be designed in such a manner so as to allow for absorbing of structural loads, particularly mechanically or thermally induced loads. The arrangement of the fibers in the fiber arrangement may thus, be chosen under consideration of the loads occurring in a specific operational environment of the support structure and thus, to improve the structural properties of the support structure in the specific operational environment. The arrangement of the fibers in the fiber arrangement may be particularly, be chosen so as to concertedly generate isotropic or anisotropic structural properties of a respective support structure element or the support structure, respectively. Different support structure elements may be provided with different isotropic or anisotropic structural properties.

According to an exemplary arrangement of fibers, a number of first fibers is arranged in a first spatial direction and/or a first spatial orientation and/or a first spatial extension and a number of further fibers is arranged in a further spatial direction and/or a further spatial orientation and/or a further spatial extension different from the first spatial direction and/or spatial orientation and/or spatial extension. Respective first fibers may be arranged in a parallel arrangement, for instance. Likewise, respective further fibers may be arranged in a parallel arrangement, for instance. At least part of the further fibers, particularly all further fibers, may particularly be arranged perpendicularly relative to at least part of the first fibers, particularly all first fibers which may result in isotropic structural properties of the support structure element or the support structure, respectively.

For the exemplary case of more than two different fibers, i.e. more than two differently arranged fibers, first fibers may be arranged in a first spatial direction and/or a first spatial orientation and/or a first spatial extension, second fibers may be arranged in a second spatial direction and/or a second spatial orientation and/or a second spatial extension different from the first spatial direction and/or the first spatial orientation and/or the first spatial extension, and third fibers may be arranged in a third spatial direction and/or a third spatial orientation and/or a third spatial extension different from the first spatial direction and/or the first spatial orientation and/or the first spatial extension and also different from the second spatial direction and/or the second spatial orientation and/or the second spatial extension. The first and second fibers may be arranged in one common plane, whereas the third fibers may be arranged in a plane different to the plane in which the first and second fibers extend. The third fibers may particularly, extend in a plane perpendicular arranged to the plane in which the first and second fibers extend. The aforementioned aspects also apply to more than three differently arranged fibers, i.e. more than three differently directed, oriented or extending fibers.

The first fibers and the further fibers may differ in their chemical and/or physical properties and/or geometrical properties. The first fibers may thus, be made of a first fiber material and the further fibers may be made of a further fiber material different from the first fiber material. Hence, fibers of different chemical properties, e.g. chemical stability, and/or physical properties, particularly mechanical properties, e.g. (tensile) strength, flexibility, stiffness, and/or geometrical properties, e.g. cross-section, thickness, length, may be used and concertedly combined, particularly in fabric- or meshwork-like manner, so as to generate a respective support structure element having customized structural properties, i.e. particularly customized mechanical and thermal properties. As indicated above in context with isotropic or anisotropic structural properties, customized structural properties also embrace different structural properties in different spatial directions, orientations, or extensions of the fiber arrangement.

The plastic- or polymer-based matrix may contain at least one, particularly particulate, filler material and/or at least one, particularly particulate, filler material structure. A respective filler material or filler material structure, respectively may concertedly adjust and/or influence the structural properties, particularly the mechanical and/or thermal properties, of the plastic- or polymer matrix, respectively and thus, the entire support structure element or support structure, respectively. Chemically and/or physically and/or geometrically (morphologically) different filler materials and filler material structures, may be used. As an example, a respective filler material may comprise particles of a carbide, particularly silicium carbide (SiC), a nitride, particularly boron nitride (BN), (fly) ash, carbon black, etc. A respective filler material structure may comprise, particularly carbon-based, nano-tube structures, for instance. The concentration of the filler materials and filler material structures in the plastic matrix may be chosen in view of desired structural properties of the support structure element or support structure, respectively.

With respect to the third group of exemplary embodiments, the at least one support structure element may be built of or comprise a sandwich structure. A sandwich structure typically, comprises an inner layer (core layer) disposed in between two outer layers. The inner layer is typically, made of a light-weight material, e.g. a foam- or honeycomb-material, whereas the outer layers are typically, made of a mechanically stable, particularly rigid, material, e.g. a metal, a fiber-reinforced plastic, i.e. particularly, a plastic-based compound material (as mentioned above), etc. At least one of the layers forming the sandwich structure may be a layer of a material having a coefficient of thermal expansion of or below 8 x 10⁻⁶ K⁻¹. Hence, a respective sandwich structure is an example of a material structure having a coefficient of thermal expansion of or below 8 x 10⁻⁶ K⁻¹.

As mentioned above, the support structure may be particularly configured to support or supports at least one optical component, e.g. beam deflecting component, such as a scanner component, and/or a beam guiding component, such as a lens component, and/or a beam shaping component, such as a lens component, for instance, assignable or assigned to an irradiation device of a respective additive manufacturing apparatus. of an irradiation device of a respective additive manufacturing apparatus.

The invention also relates to a support arrangement for an apparatus for additively manufacturing at least one three-dimensional object, the support arrangement comprising at least one functional component of a respective additive manufacturing apparatus and a support structure as described herein. The at least one functional component being supported by the support structure. The support arrangement thus, comprises at least one support structure and at least one functional component of an additive manufacturing apparatus supported by the support structure. The support arrangement may be an independent unit which can be individually handled, e.g. mounted, stored, transported. All annotations concerning the support structure also apply to the support arrangement.

Since the functional component is particularly, an optical component assignable or assigned to an irradiation device of a respective additive manufacturing apparatus, the invention also relates to an optical arrangement for an additive manufacturing apparatus. The optical arrangement comprises at least one optical component assignable or assigned to an irradiation device of a respective additive manufacturing apparatus. The at least one optical component of the optical arrangement is supported by a support structure as described herein. The optical arrangement may particularly, be a beam deflection arrangement configured to deflect an energy beam, particularly an electron beam or a laser beam, to specific positions of a build plane of a respective additive manufacturing apparatus. The optical arrangement thus, comprises at least one support structure and at least one optical component of an irradiation device of an additive manufacturing apparatus supported by the support structure. The optical arrangement may be an independent unit which can be individually handled, e.g. mounted, stored, transported. All annotations concerning the support structure also apply to the optical arrangement.

The invention further relates to an apparatus for additively manufacturing at least one three-dimensional object, e.g. a technical component, by means of successive layerwise selective consolidation of layers of build material, particularly build material layers applied in a build plane of the apparatus by means of selectively irradiation respective build material layers with at least one energy beam. The apparatus comprises at least one support structure or at least one support or optical arrangement as described herein. All annotations regarding the support structure and the support or optical arrangement also apply to the apparatus.

The apparatus can be a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The apparatus comprises a number of functional and/or structural devices which are operable or operated during its operation. Each functional and/or structural device may comprise a number of functional and/or structural sub-devices. Exemplary functional and/or structural devices are a build material application device which is configured to apply an amount of build material which is to be selectively irradiated and consolidated in the build plane of the apparatus; an irradiation device which is configured to selectively irradiate and thereby, consolidate areas of a layer of build material with at least one energy beam, the irradiation device comprising at least one respective optical arrangement; a jetting device which is configured to selectively apply a binder material in areas of a layer of build material and thereby, consolidate areas of a layer of build material with at least one binder material; a stream generating device configured to generate a process gas stream being capable of being charged with particles generated during selective irradiation and consolidation of respective layers of build material while streaming across the build plane, whereby the process gas stream is adapted to remove or transport respective particles from a layer of build material which are generated during selective irradiation and consolidation of the respective layer of build material, and a control device for controlling operation of respective devices of the additive manufacturing apparatus.

Exemplary embodiments of the invention are described with reference to the Fig., whereby:
- Fig. 1: shows a principle drawing of an apparatus for additively manufacturing of three-dimensional objects according to an exemplary embodiment; and
- Fig. 2 - 4: each show a principle drawing of a support structure according to an exemplary embodiment.

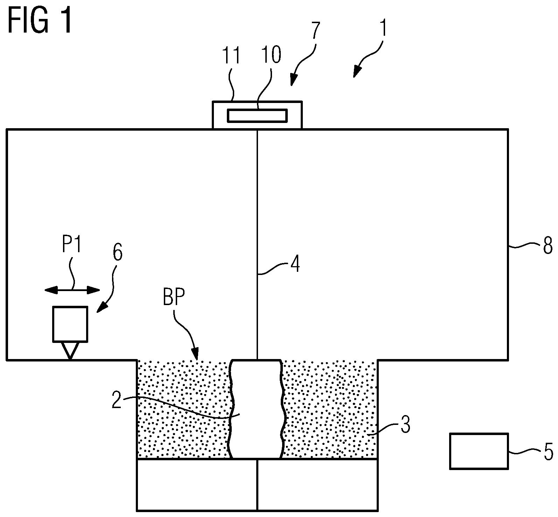

Fig. 1 shows a principle drawing of an exemplary embodiment of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4 according to an exemplary embodiment. The energy beam 4 may be an electron beam or a laser beam, for instance. The apparatus 1 may be embodied as a selective electron beam melting apparatus or as a selective laser melting apparatus, for instance. Yet, the apparatus 1 could also be a binder jetting apparatus, particularly a metal binder jetting apparatus.

The apparatus 1 comprises a number of functional and/or structural devices which are operable and operated during its operation. Each functional and/or structural device may comprise a number of functional and/or structural sub-devices. Operation of the functional and/or structural devices and the apparatus 1, respectively is controlled by a hard- and/or software embodied (central) control device 5.

Exemplary functional and/or structural devices of the apparatus 1 are a build material application device 6 and an irradiation device 7.

The build material application device 6 is configured to apply an amount of build material 3 in the build plane BP of the apparatus 1 so as to generate respective layers of build material 3 which are to be selectively irradiated and consolidated during additively manufacturing a three-dimensional object 2 by means of the apparatus 1. The build material application device 6 may be embodied as a re-coating device, for instance. The build material application device 6 is moveably supported within the process chamber 7 of the apparatus 1; the build material application device 6 may be moved across the build plane BP of the apparatus 1 so as to apply an amount of dosed build material 3 in the build plane BP of the apparatus 1 and generate a respective layer of build material 3 which is to be selectively irradiated and consolidated during additively manufacturing a three-dimensional object 2 by means of the apparatus 1. An exemplary motion of the build material application device 6 is indicated by arrow P1, which may represent an exemplary build material application direction of the build material application device 6.

The irradiation device 7 is configured to selectively irradiate and thereby, consolidate respective layers of build material 3 which have been applied in the build plane BP of the apparatus 1 by means of the build material application device 6 with at least one energy beam 4. The irradiation device 7 may comprise a beam generating device (not shown) configured to generate at least one energy beam 4 and a beam deflecting device 10, e.g. a scanning device, configured to deflect an energy beam 4 to diverse positions within the build plane BP of the apparatus 1.

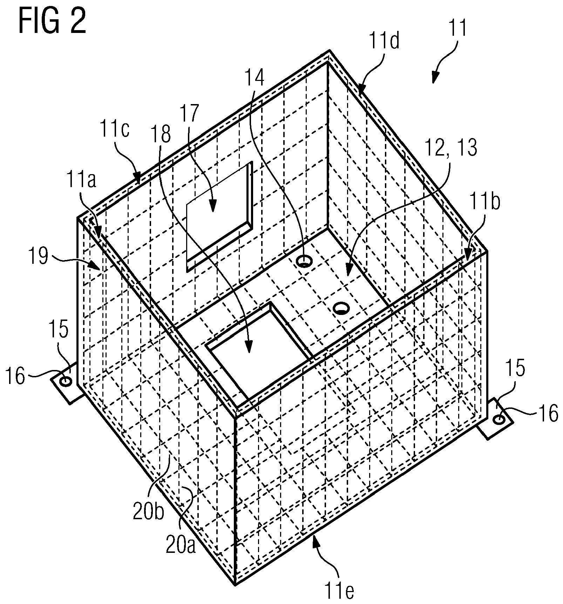

The beam deflecting device 10 - the beam deflecting device 10 being a representative example of a functional component of the apparatus 1 - is supported in a support structure 11 which will be explained in more detail with respect to Fig. 2 - 4.

Fig. 2 shows a principle drawing of a respective support structure 11 according to an exemplary embodiment in a perspective view. Fig. 2 shows the support structure 11 without a functional component of the apparatus 1 being supported therein.

The support structure 11 is configured to support at least one functional component of the apparatus 1. As mentioned before, the beam deflecting device 10 assigned to the irradiation device 7 is a representative example of a functional component of the apparatus 1. However, the following remarks also apply to other functional components of the apparatus 1 being supportable by the support structure 11.

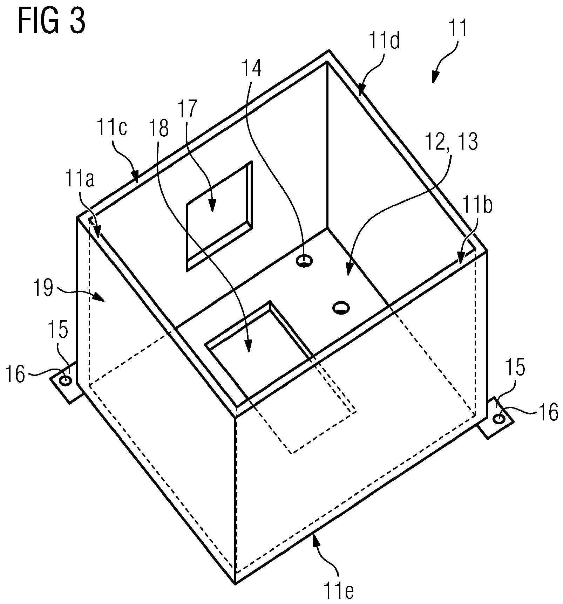

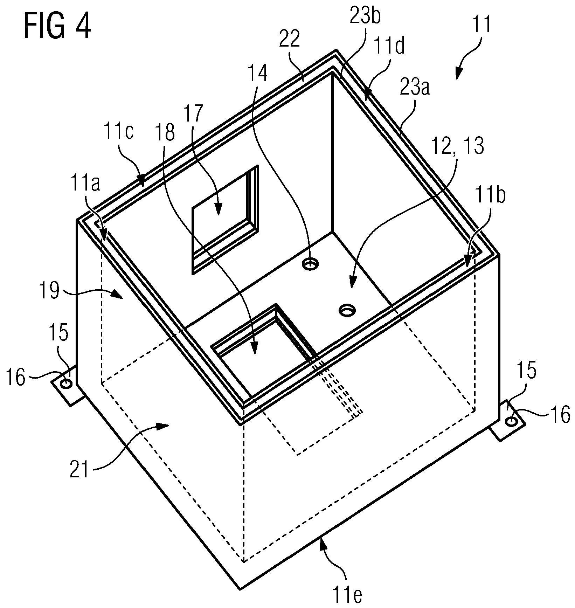

In the exemplary embodiment of Fig. 2 (the same applies to the exemplary embodiments of Fig. 3, 4), the support structure 11 has a housing-like design. The support structure 11 may thus, also be deemed or denoted as a support housing.

The support structure 11 comprises one or more, particularly interconnected, structure element(s). The support structure elements are built by the walls 11a - 11e of the support structure 11. The arrangement, shape, and size of the support structure elements generally depends on the concrete constructive design of the support structure 11. Generally, all kinds of arrangements, shapes, and sizes of support structure elements are conceivable in view of a concrete constructive design of the support structure 11.

As is apparent from Fig. 2, the support structure 11 comprises a support interface 12 for supporting at least one functional component of the apparatus 1. The support interface 12 is built as a, particularly compartment-like, receiving section 13 for receiving a respective functional component of the apparatus 1, i.e. the beam deflecting device 10 in the present exemplary embodiment. The receiving section 13 is typically designed with respective to the functional component which is to be received in it. Hence, the shape and size of the receiving section 13 is adapted to the shape and size of the functional component which is to be received in it. As is apparent from Fig. 2, the receiving section 13 is delimited by walls 11a - 11 e of the support structure 11, i.e. sidewalls 11a - 11d and bottom wall 11e.

Even if not depicted in the Fig., the support structure 11 could comprise more than one respective, particularly compartment-like, receiving section 13.

As is also apparent from Fig. 2, the support structure 11 comprises bores 14 for receiving an attachment element, e.g. a bolt, screw, etc., for attaching a respective functional component to the support structure 11. In the exemplary embodiment of Fig. 2, the bores 14 are provided with the bottom wall 11e. Alternative or additional arrangements of respective bores 14 are conceivable.

As is also apparent from Fig. 2, the support structure 11 comprises attachment interfaces 15 for directly or indirectly attaching the support structure 11 at the apparatus 1, particularly at a wall of the process chamber 8 of the apparatus 1. A respective attachment interface 15 may comprise a bore 16 for receiving an attachment element, e.g. a bolt, screw, etc., for attaching the support structure 11 to the apparatus 1. As is apparent from Fig. 1, the support structure 11 may be attached to a top wall of a process chamber 8 of the apparatus 1, for instance. The support structure 11 may be thus, attached to a freely exposed portion of a top wall of the process chamber 8 of the apparatus 1, for instance.

As is further apparent from Fig. 2, the support structure 11 may be provided with a functional opening 17 for a supply line, e.g. an energy line, optical line, etc. which is to be connected with the functional component supported by the support structure 11. Also, the support structure 11 may be provided with a functional opening 18 for an energy beam 4 used for selectively consolidating a build material layer applied in the build plane BP of the apparatus 1. Respective openings 17, 18 are exemplarily provided with a side-wall 11c and the bottom wall 11e of the support structure 11, respectively.

The support structure 11 and the support structure elements, respectively are built of a material or a material structure having a coefficient of thermal expansion (CTE) of 8 x 10⁻⁶ K⁻¹ or below 8 x 10⁻⁶ K⁻¹. The support structure 11 and the support structure elements, respectively are thus, made of a material or material structure having outstanding thermal properties, i.e. particularly a very low coefficient of thermal expansion and a very low coefficient of thermal extension.

The support structure 11 and the support structure elements thus, allow for avoiding or at least (significantly) reducing changes or drifts of the position and/or orientation of the support structure 11, when being mounted with the apparatus 1, with respect to a defined initial position and/or orientation. Since the thermal expansion and resulting drifts or changes of the position and/or orientation of the support structure 11 and the functional component(s) supported therewith may negatively affect the additive build process, building the support structure 11 and the support structure elements, respectively of a material or material structure having a very low coefficient of thermal expansion directly improves the quality of the additive build process.

According to the exemplary embodiment of Fig. 2, the support structure 11 and respective support structure elements are made of a plastic- or polymer-based material having a coefficient of thermal expansion of 8 x 10⁻⁶ K⁻¹ or even below 8 x 10⁻⁶ K⁻¹. The plastic- or polymer-based material is a plastic- or polymer-based compound material which comprises a resin-like plastic- or polymer matrix 19, particularly a thermosetting- or thermoplastic-matrix, having a plurality of reinforcing fibers 20 distributed therein in a specific fiber arrangement. The plastic- or polymer matrix 19 may be made of a polyester- or polyurethane-material, for instance. The reinforcing fibers 20 may be natural or synthetic fibers, for instance. The reinforcing fibers 20 are carbon fibers, yet, other types of reinforcing fibers, e.g. aramid fibers or glass fibers are conceivable as well.

As is indicated in Fig. 2, the reinforcing fibers 20 are arranged in a specific manner so as to form a fiber arrangement having specific structural properties which are essentially defined by the arrangement and type of the reinforcing fibers 20 forming the fiber arrangement.

The reinforcing fibers 20 are arranged in a fabric-like or fabric arrangement, particularly a meshwork-like or meshwork arrangement, in the fiber arrangement. The fabric-like or fabric arrangement may be chosen or designed under consideration of specific structural loads, e.g. mechanical and/or thermal loads, of the support structure 11. Hence, the fabric-like or fabric arrangement of the reinforcing fibers 20 may be designed in such a manner so as to allow for absorbing of structural loads, particularly mechanically or thermally induced loads. The fiber arrangement may thus, be chosen under consideration of the loads occurring in a specific operational environment of the support structure 11 and thus, to improve the structural properties of the support structure 11 in the specific operational environment. The arrangement of the reinforcing fibers 20 in the fiber arrangement may be particularly, be chosen so as to concertedly generate isotropic or anisotropic structural properties of the support structure 11.

According to the exemplary embodiment of Fig. 2, the fiber arrangement comprises first reinforcing fibers 20a and second reinforcing fibers 20b. The first reinforcing fibers 20a are arranged in a first spatial direction and/or a first spatial orientation and/or a first spatial extension and the second reinforcing fibers 20b are arranged in a further spatial direction and/or a further spatial orientation and/or a further spatial extension different from the first spatial direction and/or spatial orientation and/or spatial extension. As is apparent from Fig. 2, the first reinforcing fibers 20a are arranged in a parallel arrangement. Likewise, the second reinforcing fibers 20b may be arranged in a parallel arrangement. As is further apparent from Fig. 2, the second reinforcing fibers 20b are arranged perpendicularly relative to the first reinforcing fibers 20a, which may result in isotropic structural properties of the support structure 11 or the respective support structure element, respectively.

The first reinforcing fibers 20a and the second reinforcing fibers 20b may generally differ in their chemical and/or physical properties and/or geometrical properties. The first reinforcing fibers 20a may thus, be made of a first fiber material and the second reinforcing fibers 20b may be made of a second fiber material different from the first fiber material. Hence, fibers 20 of different chemical properties, e.g. chemical stability, and/or physical properties, particularly mechanical properties, e.g. (tensile) strength, flexibility, stiffness, and/or geometrical properties, e.g. cross-section, thickness, length, may be used and concertedly combined, particularly in fabric- or meshwork-like manner, so as to generate a support structure 11 and a respective support structure element, respectively having customized structural properties, i.e. particularly customized mechanical and thermal properties.

The plastic-based matrix 19 may contain at least one, particularly particulate, filler material and/or at least one, particularly particulate, filler material structure. Chemically and/or physically and/or geometrically (morphologically) different filler materials and filler material structures, may be used. As an example, a respective filler material may comprise particles of a carbide, particularly silicium carbide (SiC), a nitride, particularly boron nitride (BN), (fly) ash, carbon black, etc. A respective filler material structure may comprise, particularly carbon-based, nano-tube structures, for instance. The concentration of the filler materials and filler material structures in the matrix may be chosen in view of desired structural properties of the support structure element or support structure, respectively.

Fig. 3 shows a principle drawing of a respective support structure 11 according to a further exemplary embodiment in a perspective view. Fig. 3 also shows the support structure 11 without a functional component being supported therein.

According to the exemplary embodiment of Fig. 3, the support structure 11 and respective support structure elements are made of a metal having a coefficient of thermal expansion of 8 x 10⁻⁶ K⁻¹ or even below 8 x 10⁻⁶ K⁻¹. The metal is a nickel iron alloy, particularly a nickel iron alloy consisting of around 36% nickel and 64% iron known as FeNi36 (64FeNi in the USA) or Invar, respectively and has a coefficient of thermal expansion (between 20°C and 100°C) of about 1,2 x 10⁻⁶ K⁻¹. Yet, nickel iron alloys of other compositions, such as FeNi42, or FeNi33Co4.5, are also conceivable.

Fig. 4 shows a principle drawing of a respective support structure 11 according to a further exemplary embodiment in a perspective view. Fig. 4 also shows the support structure 11 without a functional component being supported therein.

According to the exemplary embodiment of Fig. 4, the support structure 11 and respective support structure elements are made of or comprise a sandwich structure 21 having a coefficient of thermal expansion of 8 x 10⁻⁶ K⁻¹ or even below 8 x 10⁻⁶ K⁻¹. The sandwich structure 21 comprises an inner layer 22 (core layer) disposed in between two outer layers 23a, 23b. The inner layer 22 is made of a light-weight material, e.g. a foam or honeycomb material, whereas the outer layers 23a, 23b are made of a mechanically stable, particularly rigid, material, e.g. a metal, a fiber-reinforced plastic, i.e. particularly, a plastic-based compound material (as mentioned above), etc. At least one of the layers 22, 23a, 23b forming the sandwich structure 21 may be a layer of a material having a coefficient of thermal expansion of or below 8 x 10⁻⁶ K⁻¹.

The support structures 11 according to the exemplary embodiments of Fig. 2 - 4, may build a support arrangement for an additive manufacturing apparatus, the support arrangement comprises at least one functional component of a respective additive manufacturing apparatus and a support structure 11. The functional component being supported by the support structure 11. The support arrangement may be an independent unit which can be individually handled, e.g. mounted, stored, transported.

Since the functional component is particularly, an optical component assignable or assigned to an irradiation device 7 of a respective additive manufacturing apparatus, the support structure 11 may also build an optical arrangement for an additive manufacturing apparatus. The optical arrangement comprises at least one optical component assignable or assigned to the irradiation device 7 of the additive manufacturing apparatus and a respective support structure 11. The optical arrangement being supported by the support structure 11. The optical arrangement may be an independent unit which can be individually handled, e.g. mounted, stored, transported.

Even if not depicted in the Fig. the support structure 11 according to any of the exemplary embodiments may be mounted on further, particularly bar- or rod-like, support elements which may also be made of a respective material having a coefficient of thermal expansion of or below 8 x 10⁻⁶ K⁻¹.

All exemplary embodiment may be readily combined with each other.

## Claims

1. Support structure (11) for supporting a functional component of an apparatus (1) for additively manufacturing at least one three-dimensional object (2) by means of successive layerwise selective consolidation of layers of a build material (3), **wherein** the support structure (11) comprises at least one support structure element which is built of a material or material structure having a coefficient of thermal expansion of 8 x 10⁻⁶ K⁻¹ or below 8 x 10⁻⁶ K⁻¹.

2. Support structure according to Claim 1, **wherein** the material is a metal or a, particularly plastic-based, compound material.

3. Support structure according to Claim 2, **wherein** the material is a metal, whereby the metal is or comprises a nickel iron alloy.

4. Support structure according to Claim 3, **wherein** the nickel iron alloy is FeNi36, FeNi42, or FeNi33Co4.5.

5. Support structure according to any of the preceding Claims, **wherein** the material is a plastic-based compound material comprising a resin-like plastic matrix (19), particularly a thermoplastic or thermosetting resin-like plastic matrix, having a plurality of fibers (20), particularly reinforcing fibers, distributed therein.

6. Support structure according to Claim 5, **wherein** at least a part of the fibers (20) is arranged in a fabric-like or fabric arrangement, whereby a number of first fibers (20a) is arranged in a first spatial direction and/or a first spatial orientation and/or a first spatial extension and a number of further fibers (20b) is arranged in a further spatial direction and/or a further spatial orientation and/or a further spatial extension different from the first spatial orientation and/or spatial extension.

7. Support structure according to Claim 5 or 6, **wherein** the first fibers (20a) or first fibers (20a) differ from the further fibers (20b) or further fibers (20b) in at least one chemical property and/or physical property and/or geometrical property.

8. Support structure according to any of the preceding Claims, **wherein** the polymer-based matrix (19) contains at least one, particularly particulate, filler material and/or at least one, particularly particulate, filler material structure.

9. Support structure according to any of the preceding Claims, **wherein** the at least one support structure element is built of or comprises a sandwich structure.

10. Support structure according to any of the preceding Claims, **wherein** the at least one support structure element comprises at least one support interface for supporting at least one functional component of a respective apparatus (1).

11. Support structure according to any of the preceding Claims, **wherein** the support structure (11) comprises at least one, particularly compartment-like, receiving portion (13) for receiving the at least one functional device of a respective apparatus (1).

12. Support structure according to any of the preceding Claims, **wherein** the support structure (11) is configured to support or supports at least one optical component of an irradiation device (7) of a respective apparatus (1).

13. Support arrangement for an apparatus (1) for additively manufacturing at least one three-dimensional object (2), the support arrangement comprising at least one functional component, particularly at least one optical component assignable or assigned to an irradiation device of a respective apparatus, and at least one support structure (11) according to any of the preceding Claims, wherein the at least one functional component is supported by the support structure (11).

14. Optical arrangement for an apparatus (1) for additively manufacturing at least one three-dimensional object (2), the support arrangement comprising at least one optical component assignable or assigned to an irradiation device (7) of a respective apparatus (1) and at least one support structure (11) according to any of the Claims 1 - 12, wherein the at least one optical component is supported by the support structure (11).

15. Apparatus (1) for additively manufacturing at least one three-dimensional object (2) by means of successive layerwise selective consolidation of layers of build material (3), the apparatus (1) comprising at least one support structure (11) according to any of Claims 1 - 13 and/or at least one support arrangement according to Claim 13 and/or at least one optical arrangement according to Claim 14.
